# EUROPÄISCHE PATENTSCHRIFT

(11) **EP 2 136 898 B1**
(45) Veröffentlichungstag und Bekanntmachung des Hinweises auf die Patenterteilung: **29.02.2012**
(21) Anmeldenummer: 08735877.6
(22) Anmeldetag: 07.04.2008
(51) Int. Cl.: F25D 23/12, B01D 65/10, B01D 65/00

(54) **KÄLTEGERÄT MIT WASSERFILTER**
REFRIGERATION DEVICE HAVING A WATER FILTER
APPAREIL DE RÉFRIGÉRATION AVEC UN FILTRE À EAU

(30) Priorität: 16.04.2007 DE 102007017840
(43) Veröffentlichungstag der Anmeldung: 30.12.2009
(73) Patentinhaber: BSH Bosch und Siemens Hausgeräte GmbH, 81739 München (DE)
(72) Erfinder: HAUSMANN, Georg, 89434 Blindheim (DE); IHLE, Hans, 89537 Giengen (DE); KEMPTE, Andreas, 09405 Zschopau (DE); NALBACH, Peter, 73230 Kirchheim/Nabern (DE); ROTH, Michael, 89537 Giengen (DE)
(86) Internationale Anmeldenummer: PCT/EP2008/054143
(87) Internationale Veröffentlichungsnummer: WO 2008/125530

(56) Entgegenhaltungen:
- EP-A- 1 030 143
- WO-A-03/070351
- WO-A-03/099732
- WO-A-2007/062904
- WO-A1-03/011426
- WO-A1-03/011426

## Beschreibung

Die vorliegende Erfindung betrifft ein Kältegerät mit einer Wasserleitung, einem in der Wasserleitung austauschbar angebrachten Wasserfilter und einem Sensor zum Wechselwirken mit dem Wasserfilter.

Ein Kältegerät dieser Art ist aus US6 355 177 B2 bekannt. Bei diesem bekannten Kältegerät sind Sensoren in Form von zwei Schaltern an einem Montageplatz des Wasserfilters angeordnet, von denen der eine nur betätigt ist, wenn tatsächlich ein Wasserfilter in der Wasserleitung angebracht ist, der zweite betätigt ist, wenn das Wasserfilter angebracht ist oder wenn anstelle des Wasserfilters ein Blindstopfen die Wasserleitung verschließt, und von denen keiner betätigt ist, wenn weder Filter noch Blindstopfen angebracht sind.

Ferner sind Mittel vorgesehen, um durch eine Messung der Offnungszeitdauer eines Ventils in der Wasserleitung die durch das Wasserfilter geflossene Wassermenge zu überwachen und ein Warnsignal für einen Benutzer zu erzeugen, wenn diese Wassermenge die spezifizierte Kapazität des Wasserfilters erreicht. Das Signal eines der zwei Schalter wird ausgewertet, um einen erfassten Wassermengenzählwert zurückzusetzen, wenn das Filter ausgetauscht worden ist.

Aus US6 613 236 B1 ist ein Kältegerät mit eingebautem Wasserfilter und einer Vorrichtung zum Vergleichen einer erfassten, durch das Filter geflossenen Wassermenge mit einem Grenzwert und zum Erzeugen eines Warnsignals bei Erreichen des Grenzwertes bekannt. Der Grenzwert ist in Abhängigkeit von einem Filtertyp, der in dem Kältegerät eingesetzt wird, umschaltbar.

Bei diesen bekannten Kältegeräten beginnt die Überwachung der durch das Filter geflossenen kumulierten Wassermenge jedes Mal bei Null, wenn ein Filter ausgebaut und neu eingebaut worden ist, unabhängig davon, ob das neu eingebaute Filter tatsächlich frisch ist. So besteht die Gefahr, dass ein Benutzer, weil er zu dem Zeitpunkt, wo die Kapazität eines eingebauten Filters erschöpft ist, kein Austauschfilter zur Verfügung hat, lediglich das vorhandene Filter aus- und wieder einbaut, um das Warnsignal zu beseitigen. Ein solches Verhalten kann zu einer Gesundheitsgefährdung führen, da die unerwünschten Bestandteile, die ein solcher Filter aus dem Wasser ausfiltert, sich in dem Filter sammeln und dort einen Nährboden für Keime bilden. Wenn diese nicht mehr zuverlässig abgefiltert werden und in das aus dem Filter austretende Wasser gelangen, kann dessen Keimdichte höher sein als die des in das Filter eintretenden Wassers und unter ungünstigen Umständen sogar höher als für Trinkwasser zulässig. Gerade bei in Kältegeräten eingesetzten Wasserfiltern ist dies bedenklich, da das dort gefilterte Wasser im Allgemeinen ohne eine weitere Entkeimung zum direkten menschlichen Genuss dient, sei es in Form von an einem Spender des Kältegerätes abgezapftem gekühltem Trinkwasser oder in Form von in dem Kältegerät erzeugten Eisstückchen.

Die Offenlegungsschrift WO 03/070351 A1 zeigt ein System zur Überwachung einer Leistung einer Filterkartusche.

Die Offenlegungsschrift WO 03/099732 A1 zeigt eine Wasserfiltervorrichtung mit einem Filterelement, wobei mehrere Sensoren zur Messung eines pH-Wertes oder einer Temperatur vorgesehen sein können.

Die Offenlegungsschrift EP 1 030 143 A2 zeigt eine Kaltwasserspendervorrichtung für einen Kühlschrank.

Aufgabe der vorliegenden Erfindung ist, diese Gefahr zu beseitigen.

Die Aufgabe wird durch eine Vorrichtung gemäß Anspruch 1 gelöst, wobei der Wasserfilter ein an seinen Abnutzungsgrad gekoppeltes veränderliches körperliches Merkmal aufweist, und der Sensor eingerichtet ist, dieses veränderliche Merkmal zu erfassen.

Einer einfachen nicht erfindungsgemäßen Ausgestaltung zufolge ist dieses Merkmal durch einen ersten Wasserfluss durch das Filter veränderbar.

Insbesondere kann es sich bei dem Merkmal um den intakten oder beschädigten Zustand einer Membran des Filters handeln. Eine solche Membran kann gleichzeitig zur Versiegelung des Filters im fabrikneuen Zustand dienen.

Das Kältegerät umfasst zweckmäßigerweise einen Verbrauchszähler zum Erfassen, ob die Menge an durch den Wasserfilter geflossenem Wasser einen Grenzwert überschreitet, sowie Mittel zum Anzeigen eines Warnsignals, wenn eine Überschreitung des Grenzwertes erfasst wird.

Ein zweiter Sensor kann vorgesehen sein, um einen Typ des Wasserfilters zu erfassen; in diesem Fall ist der Grenzwert zweckmäßigerweise in Abhängigkeit vom erfassten Typ des Wasserfilters vorgegeben.

Erfindungsgemäß ist der Verbrauchsmesser in das austauschbare Filter selbst integriert und der Sensor eingerichtet, einen von dem Verbrauchsmesser angezeigten Abnutzungsgrad als das veränderliche Merkmal zu erfassen.

Weitere Merkmale und Vorteile der Erfindung ergeben sich aus der Beschreibung von Ausführungsbeispielen unter Bezugnahme auf die beigefügten Figuren. Es zeigen:
- Fig. 1: einen schematischen Schnitt durch ein erfindungsgemäßes Kältegerät;
- Fig. 2: einen Schnitt durch eine Filterfassung und einen daran angebrachten Wasserfilter gemäß einer ersten nicht erfindungsgemäßen Ausgestaltung;
- Fig. 3: einen Schnitt durch die Filterfassung und einen daran angebrachten Wasserfilter eines zweiten, nicht erfindungsgemäßen mit dem in Fig. 2 gezeigten kompatiblen Typs; und
- Fig. 4: einen zu Fig. 2 analogen Schnitt gemäß einer erfindungsgemäßen zweiten Ausgestaltung.

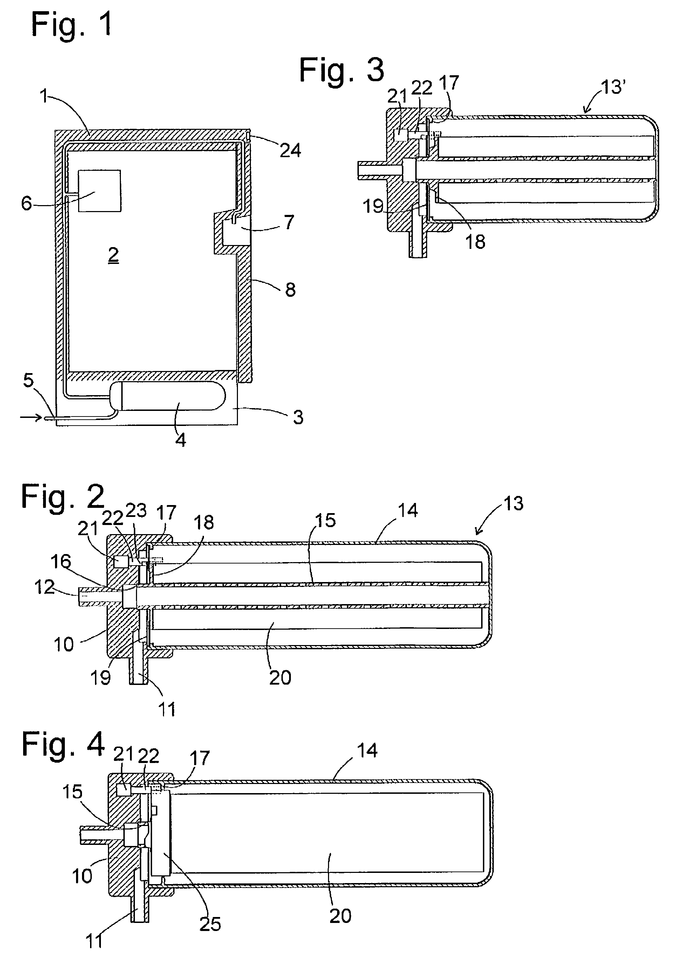

Das in Fig. 1 schematisch dargestellte Kältegerät hat in an sich bekannter Weise einen Korpus 1 mit einem wärmeisolierten Innenraum 2 und einem Sockelbereich 3 unterhalb des Innenraumes 2, in dem ein Wasserfilter 4 untergebracht ist. Der Sockelbereich 3 enthält noch weitere Komponenten wie etwa einen Verdichter und einen Verflüssiger, die, da an sich bekannt, nicht dargestellt sind.

Der Wasserfilter 4 ist über eine Leitung 5 an das Brauchwassernetz eines Gebäudes angeschlossen und speist einen automatischen Eisbereiter 6, der in dem Innenraum 2 untergebracht ist, sowie einen Spender 7 für gekühltes Trinkwasser, der in einer Nische der Tür 8 untergebracht ist.

Durch Wasserbedarf des Eisbereiters 6 oder des Spenders 7 automatisch gesteuerte Ventile sind, da an sich bekannt, in der Zeichnung weggelassen.

Fig. 2 zeigt einen Schnitt durch den Wasserfilter 4 und dessen Halterung im Sockelbereich 3 gemäß einer ersten nicht erfindungsgemäßen Ausgestaltung. Die Halterung umfasst einen Schraub- oder Bajonettsockel 10 mit einem radial orientierten Einlassanschluss 11 und einem axial orientierten Auslassanschluss 12. Eine in dem Sockel 10 verschraubte oder verriegelte Filterkartusche 13 hat ein becherförmiges Gehäuse 14, das benachbart zu seiner offenen Seite mit einem mit dem Sockel 10 zusammenwirkenden Außengewinde oder Bajonettrippen versehen ist. Auf der Längsachse des Bechers erstreckt sich ein vielfach durchbrochenes Rohr 15, von dem ein stromabwärtiges Ende 16 an dem Sockel 10 den Auslassanschluss 12 dicht umschließend anliegt.

Das Rohr 15 und das Gehäuse 14 sind mit einander zugewandten umlaufenden Rippen 17, 18 versehen, zwischen denen sich eine Membran 19 ringförmig erstreckt. Im fabrikneuen Zustand versiegelt die Membran die Einlassseite des Filters.

Im Inneren des Gehäuses 14 umgibt ein hohlzylindrischer Filterkörper 20 das Rohr 15.

In dem Sockel 10 ist ein Schalter 21 untergebracht, der durch einen Schieber 22 betätigbar ist. In der in Fig. 2 gezeigten Konfiguration drückt der Schieber 22 mit seiner gestuften Spitze gegen die Membran 19. Wenn ein Ventil in der Leitung 5 geöffnet wird, steht der Druck des Brauchwassernetzes an der Membran 19 an, und diese reißt auf. Dies ermöglicht es dem Schieber 22, in eine zweite Stellung vorzurücken, in der eine Schulter 23 des Schiebers 22 an der Rippe 18 des Rohres 15 zur Anlage kommt. Eine dritte, noch weiter vorgeschobene Stellung des Schiebers 22 ist nur erreichbar, wenn die Filterkartusche 13 entfernt ist.

Alle drei Stellungen des Schalters 21 sind durch eine nicht dargestellte Steuerelektronik des Kältegerätes erfassbar. Die Steuerelektronik ist mit einem nicht dargestellten Wasserzähler an der Leitung 5 verbunden, um die Menge des durch die Leitung 5 geflossenen Wassers zu erfassen. Wenn die Steuerelektronik feststellt, dass der Schieber 22 in seiner ersten Stellung ist, so erkennt sie daran, dass ein frischer Filter montiert worden ist, und sie setzt den Zählwert für das durch die Leitung 5 geflossene Wasser auf Null. Sobald der Zählwert einen für den betreffenden Typ von Wasserfilter den vorgegebenen ersten Grenzwert erreicht hat, signalisiert die Steuerelektronik einem Benutzer an einer Anzeige 24, z. B. einer Leuchtanzeige (siehe Fig. 1), dass der Wasserfilter weitgehend abgenutzt ist und Ersatz beschafft werden muss. Bei Überschreitung eines zweiten, höheren Grenzwertes, signalisiert sie dem Benutzer, dass es erforderlich ist, den Filter auszuwechseln. Nur der Austausch des abgenutzten Filters durch einen neuen mit intakter Membran 19 führt dazu, dass der Schalter 21 seine erste Stellung erreicht, der Zählwert zurückgesetzt wird und das Warnsignal an der Anzeige 24 verschwindet.

Wenn der Schalter 21 seine dritte Stellung einnimmt, so könnte dies bedeuten, dass anstelle der Filterkartusche 13 ein leeres Gehäuse in dem Sockel 10 montiert ist. Dies wird insbesondere dann der Fall sein, wenn der Benutzer ein Wasserfilter im Kältegerät nicht benötigt, sei es, weil die Qualität des zur Verfügung stehenden Brauchwassers ausreichend ist oder weil eine Filterung des Brauchwassers bereits an anderer Stelle, noch vor Erreichen des Kältegerätes, stattgefunden hat. In diesem Fall reagiert die Steuerschaltung auf die Erfassung der dritten Stellung, indem sie den Wasserfluss durch die Leitung 5 nicht zählt oder zumindest von einem vorhandenen Zählwert kein Warnsignal ableitet und anzeigt.

Eine zweite sinnvolle Nutzungsmöglichkeit der dritten Stellung des Schalters 21 ist, dass die Steuerelektronik das Öffnen eines stromaufwärts vom Wasserfilter 4 in der Leitung 5 angeordneten Ventils sperrt, so lange der Schalter 21 in der dritten Stellung ist, da dieser die dritte Stellung auch dann einnehmen kann, wenn der Sockel 10 unbelegt ist. In diesem Fall würde das Öffnen des Ventils zum Auslaufen von Wasser führen.

Eine Sperrung der Wasserzählung bzw. der Erzeugung eines Warnsignals an der Anzeige 24 ist bei dieser Abwandlung auch erreichbar, indem dem Benutzer als Zubehörteil ein Leergehäuse oder ein Deckel zur Verfügung gestellt wird, der, wenn er in dem Sockel 10 montiert ist, den Schalter 21 dauerhaft in seiner ersten Stellung hält. Da diese Stellung einem Zurücksetzen des Zählwerts entspricht, kann ein - in diesem Fall unzweckmäßiges - Warnsignal nicht erzeugt werden.

Fig. 3 zeigt einen Schnitt durch den Sockel 10 von Fig. 2 mit einer darin montierten Filterkartusche 13' eines zweiten Typs. Sie ist kürzer als die Filterkartusche 13, und ihre Filterkapazität ist dementsprechend kleiner. Der von dem Schieber 22 berührte Bereich der Rippe 18 ist im Vergleich zu Fig. 2 axial verschoben, so dass der Schieber 22 die die Rippe 18 gar nicht oder allenfalls in seiner dritten Stellung berührt. Die Filterkartusche 13' kann beispielsweise in einem anderen Kältegerätemodell als dem der Fig. 1 eingesetzt werden, wo der für die große Kartusche 13 benötigte Platz nicht zur Verfügung steht. Dennoch kann eine einheitliche Steuerelektronik für beide Gerätemodelle verwendet werden, da die Steuerelektronik durch die Feststellung, ob sich der Schalter 21 in der zweiten oder der dritten Stellung befindet, entscheiden kann, welches Modell von Filterkartusche, 13 oder 13', montiert ist, und den der Entscheidung über die Erzeugung eines Warnsignals an der Anzeige 24 zu verwendenden Grenzwert jeweils dementsprechend wählen kann.

Selbstverständlich könnte in diesem Fall eine vierte Stellung des Schalters 21, mit noch weiter vorgeschobenem Schieber 22, vorgesehen werden, um auch hier das Fehlen jeglicher Filterkartusche 13 oder 13' zu erfassen.

Es bereitet dem Fachmann auch keine Schwierigkeiten, die Funktionen des Schalters 21 mit Hilfe mehrerer, jeweils einfacherer Schalter zu realisieren, zum Beispiel einem zum Erfassen des Vorhandenseins oder Nicht-Vorhandenseins einer Filterkartusche, einem zum Erfassen ihrer Unversehrtheit und einem weiteren zum Erfassen ihres Typs.

Die bisher beschriebenen Ausgestaltungen sind im Bezug auf den Abnutzungsgrad eines Filters lediglich in der Lage, zwischen den Zuständen neu und gebraucht zu unterscheiden. Dies führt dazu, dass ein Filter, nachdem es einmal ausgebaut worden ist, nicht mehr geeignet ist, den Wasserzählwert der Steuerelektronik zurückzusetzen und das Warnsignal der Anzeige 24 zum Verschwinden zu bringen, auch wenn seine Filterkapazität noch nicht ausgeschöpft ist. Diesen Nachteil behebt die in Fig. 4 erfindungsgemäße gezeigte Ausgestaltung. Bei dieser Ausgestaltung ist um das sockelseitige Ende des Rohres 15 herum drehbar eine Anzeigescheibe 25 montiert. Die Anzeigescheibe 25 ist durch die Wasserströmung durch den Filter drehangetrieben, zum Beispiel mit Hilfe eines in dem Rohr 15 angebrachten, in der Figur nicht sichtbaren Schaufelrades.

Am Umfang der Anzeigescheibe 25 ist eine Kerbe gebildet. Das Rohr 15, die Anzeigescheibe 25 und ein das Rohr 15 umgebender Filterkörper 20 bilden eine vom Gehäuse 14 getrennt zu handhabende Baueinheit, so dass es möglich ist, das Gehäuse 14 leer in dem Sockel 10 zu montieren. Wenn dies der Fall ist, berührt der Schieber 22 die umlaufende Rippe 17 des Gehäuses 14 und zeigt so der Steuerelektronik an, dass ein dem Einlassanschluss 11 vorgeschaltetes Ventil geöffnet werden darf. Das gleiche gilt, wenn der Schieber 22, wie in der Figur gezeigt, an einer dem Sockel 10 zugewandten Stirnseite der Anzeigescheibe 25 anliegt. Wenn im Laufe des Betriebs die Kerbe den Schieber 22 erreicht und dieser in die Kerbe einrastet, so zeigt dies an, dass die Kapazität des Filters erschöpft ist und ein Austausch erforderlich ist. Ein von dem Filter getrennter Wasserzähler, wie bei den oben betrachteten Ausgestaltungen vorgesehen, kann hier entfallen.

Es ist möglich, den Schieber 22 oder die Kerbe jeweils in axialer Richtung gestuft auszuführen, so dass der Schieber 22 zunächst nur wenig in die Kerbe einrücken kann, entsprechend der Erzeugung eines ersten Warnsignals durch die Steuerelektronik, das die bevorstehende Erschöpfung des Filters anzeigt, und anschließend, nach weiterer Drehung der Scheibe 25, tiefer einrückt, entsprechend der Erzeugung eines zweiten, die vollständige Erschöpfung des Filters anzeigenden Warnsignal.

## Patentansprüche

1. Kältegerät mit einer Wasserleitung (5), einem in der Wasserleitung (5) austauschbar angebrachten Wasserfilter (13, 13') und einem Sensor (21, 22) zum Wechselwirken mit dem Wasserfilter (13, 13'), **dadurch gekennzeichnet, dass** der Wasserfilter (13, 13') ein an seinen Abnutzungsgrad gekoppelt veränderliches körperliches Merkmal (19, 26) aufweist und der Sensor (21, 22) eingerichtet ist, dieses veränderliche Merkmal zu erfassen, wobei ein Verbrauchsmesser (25) zum Erfassen, ob die Menge an durch den Wasserfilter geflossenem Wasser einen Grenzwert überschreitet, und Mittel (24) zum Anzeigen eines Warnsignals, wenn eine Überschreitung des Grenzwerts erfasst wird, vorgesehen sind, wobei der Verbrauchsmesser (25) in das austauschbare Filter (15, 20, 25) integriert ist und der Sensor (21, 22) eingerichtet ist, einen von dem Verbrauchsmesser (25) angezeigten Abnutzungsgrad zu erfassen.

2. Kältegerät nach Anspruch 1, **dadurch gekennzeichnet, dass** das Merkmal (19) durch einen ersten Wasserfluss durch das Filter (13, 13') veränderbar ist.

3. Kältegerät nach Anspruch 2, **dadurch gekennzeichnet, dass** das Merkmal der intakte oder beschädigte Zustand einer Membran (19) des Filters (13, 13') ist.

4. Kältegerät nach Anspruch 1, **dadurch gekennzeichnet, dass** ein zweiter Sensor (21, 22) zur Erfassung eines Typs des Wasserfilters (13, 13') vorgesehen ist.

## Claims

1. Refrigerating appliance with a water conduit (5), a water filter (13, 13') exchangeably mounted in the water conduit (5) and a sensor (21, 22) for interaction with the water filter (13, 13'), **characterised in that** the water filter (13, 13') has a physical feature (19, 26) in variable coupling with its degree of wear and the sensor (21, 22) is equipped to detect this variable feature, wherein a consumption meter (25) for detection whether the amount of water that has flowed through the water filter has exceeded a limit value and means (24) for indicating a warning signal if exceeding of the limit value is detected are provided, wherein the consumption meter (25) is integrated in the exchangeable filter (15, 20, 25) and the sensor (21, 22) is equipped to detect a degree of wear indicated by the consumption meter (25).

2. Refrigerating appliance according to claim 1, **characterised in that** the feature (19) is variable by a first water flow through the filter (13, 13').

3. Refrigerating appliance according to claim 2, **characterised in that** the feature is the intact or damaged state of a diaphragm (19) of the filter (13, 13').

4. Refrigerating appliance according to claim 1, **characterised in that** a second sensor (21, 22) for detection of a type of the water filter (13, 13') is provided.

## Revendications

1. Appareil de réfrigération comprenant une conduite d'eau (5), un filtre à eau (13, 13') placé de manière interchangeable dans la conduite d'eau (5) et un capteur (21, 22) pour l'interaction avec le filtre à eau (13, 13'), **caractérisé en ce que** le filtre à eau (13, 13') présente une caractéristique physique (19, 26) modifiable, couplée à son degré d'usure, et **en ce que** le capteur (21, 22) est configuré pour détecter cette caractéristique modifiable, un compteur de consommation (25), destiné à détecter si la quantité d'eau ayant coulé à travers le filtre à eau dépasse une valeur limite, et des moyens (24) destinés à afficher un signal d'avertissement lorsqu'un dépassement de la valeur limite est détecté, étant ménagés, le compteur de consommation (25) étant intégré dans le filtre interchangeable (15, 20, 25), et le capteur (21, 22) étant configuré pour détecter un degré d'usure affiché par le compteur de consommation (25).

2. Appareil de réfrigération selon la revendication 1, **caractérisé en ce que** la caractéristique (19) est modifiable par un premier écoulement d'eau à travers le filtre (13, 13').

3. Appareil de réfrigération selon la revendication 2, **caractérisé en ce que** la caractéristique est l'état intact ou endommagé d'une membrane (19) du filtre (13, 13').

4. Appareil de réfrigération selon la revendication 1, **caractérisé en ce qu'**un second capteur (21, 22) est ménagé pour détecter un type du filtre à eau (13, 13').
